Europäisches Patentamt

European Patent Office

Office européen des brevets

(11) Numéro de publication: **0 317 447 B1**

# (12) FASCICULE DE BREVET EUROPEEN

(45) Date de publication de fascicule du brevet: **07.09.94**

(51) Int. Cl.5: **C08L 83/04**, C08K 13/02, C08J 3/02

(21) Numéro de dépôt: **88420354.8**

(22) Date de dépôt: **18.10.88**

(54) **Emulsion aqueuse de silicone pouvant réticuler en un élastomère par élimination de l'eau.**

(30) Priorité: **20.10.87 FR 8714748**

(43) Date de publication de la demande:
**24.05.89 Bulletin 89/21**

(45) Mention de la délivrance du brevet:
**07.09.94 Bulletin 94/36**

(84) Etats contractants désignés:
**AT BE CH DE ES FR GB GR IT LI LU NL SE**

(56) Documents cités:
EP-A- 0 134 912      EP-A- 0 149 382
FR-A- 2 431 992      US-A- 3 070 560
US-A- 3 146 799      US-A- 4 496 687

Noll W., Chemie und Tecnologie der Silicone, Verlag Chemie GmbH 1968, pp.289-292 und 343-348.

(73) Titulaire: **RHONE-POULENC CHIMIE**
**25, quai Paul Doumer**
**F-92408 Courbevoie Cédex (FR)**

(72) Inventeur: **Pouchol, Jean-Marie**
**53, rue Villeroy**
**F-69003 Lyon (FR)**
Inventeur: **Ulrich, Jean**
**Rue de Villeneuve**
**Ternay**
**F-69360 Saint Symphorien d'Ozon (FR)**

(74) Mandataire: **Trolliet, Maurice et al**
**RHONE-POULENC CHIMIE**
**Direction de la Propriété Industrielle**
**Centre de Recherches des Carrières**
**B.P. 62**
**F-69192 Saint-Fons Cédex (FR)**

## Description

La présente invention concerne une émulsion aqueuse de silicone pouvant réticuler en un élastomère par élimination de l'eau.

Le brevet US-A-2 891 920 décrit un procédé de polymérisation en émulsion de polydiorganosiloxane en utilisant un catalyseur acide ou basique en présence d'agents tensio-actifs anioniques, cationiques ou non-ioniques. Ce brevet enseigne que les émulsions obtenues sont stables au stockage et sont utiles, après addition de charges, pour faire des peintures donnant un revêtement continu par élimination de l'eau.

Le brevet US-A-3 294 725 décrit en particulier l'utilisation d'acide dodécylbenzène-sulfonique pour polymériser en émulsion des polydiorganosiloxanes. Ce brevet enseigne que pour obtenir des émulsions stables, il est souhaitable de régler le pH de ces émulsions à une valeur de 7 environ. Ce brevet enseigne que l'on peut obtenir à partir de ces émulsions neutralisées, auxquelles on a ajouté de la silice colloïdale et un polyalcoxysilane, un revêtement élastomère.

L'enseignement du brevet US-A-3 360 491 est similaire à celui de US-A-3 294 725, sauf que l'acide dodécylbenzène sulfonique est remplacé par l'hydrogénolaurylsulfate.

Le brevet US-A-3 355 406 décrit entre autre un latex de silicone comportant :
- une suspension aqueuse colloïdale d'un $\alpha,\omega$-(dihydroxy)polydiorganosiloxane,
- une charge comportant nécessairement un silsesquioxane sous forme d'une suspension colloïdale,
- un catalyseur choisi parmi des acides minéraux, des bases fortes, des diacylates de dialkylétain et des péroxydes organiques ou inorganiques.

Le brevet US-A-3 697 469 décrit un procédé particulier de polymérisation en émulsion de polydiorganosiloxanes et indique la possibilité d'ajouter à cette émulsion de la silice colloïdale et un sel d'étain en vue d'obtenir un revêtement élastomère par évaporation d'eau.

Le brevet français FR-A-2 110 358 décrit une émulsion silicone à pH compris entre 6,5 et 9, réticulant en un élastomère conducteur de l'électricté après évaporation de l'eau par incorporation de noir de carbone. L'émulsion, comportant en outre un sel d'étain et un polyalcoxysilane, n'est pas stable au stockage et doit être conservée en deux emballages distincts (émulsion bicomposante).

Les brevets américains US-A-4 221 688, US-A-4 244 849 et français FR-A-2 463 163 décrivent des émulsions silicone stables au stockage et comportant :
- une émulsion d'un polymère $\alpha,\omega$-(dihydroxy)polydiorganosiloxane stabilisée anioniquement,
- une charge siliceuse,
- un sel d'étain,
- éventuellement une charge non renforçante.

La charge siliceuse peut être une silice colloïdale (US-A-4 221 688), du silicate de soude (US-A-4 224 849), ou une silice amorphe en poudre (FR-A-2 463 163).

Par rapport aux émulsions aqueuses connues de l'art antérieur, ces trois brevets enseignent d'une part que pour obtenir une émulsion monocomposante stable au stockage il faut conserver l'émulsion à un pH alcalin supérieur à 8,5 ou 9, de préférence supérieur à 10, et, d'autre part, incorporer à l'émulsion un sel d'étain pour raccourcir à quelques jours l'étape de maturation de l'émulsion nécessaire à l'obtention d'une stabilité au stockage acceptable avant son conditionnement dans un seul emballage.

Si le règlage à un pH alcalin de l'émulsion a permis d'améliorer la stabilité au stockage par rapport aux émulsions connues conservées à un pH neutre ou basique, il est apparu que l'élastomère obtenu après évaporation de l'eau présente au cours du temps une modification importante de ses propriétés mécaniques en particulier au niveau de l'allongement, qui peut être préjudiciable.

Cette modification des propriétés mécaniques n'est pas, pour l'homme de métier, un phénomène surprenant. Il est en effet bien connu que les polymères silicones dans un milieu alcalin se dépolymérisent en espèce de masse moléculaire peu élevée, y compris en espèce monomère.

Ces coupures des chaînes silicones sont bien entendu à l'origine des modifications des propriétés mécaniques de l'élastomère au cours du temps, 'est-à-dire au cours de son vieillissement.

En outre les émulsions silicones chargées connues, conservées à pH acide ou neutre, présentent au moins l'un des inconvénients suivants :
- elles ne sont pas stables au stockage quand elles son conditionnées en un seul emballage (composition monocomposante),
- elles présentent un temps de durcissement trop long en un élastomère,
- elles ne sont pas thixotropes. Le brevet américain US-A-4,496,687 décrit des émulsions aqueuses de silicones réticulables en un élastomère par élimination de l'eau, stables au stockage et comportant :
- une émulsion aqueuse d'un $\alpha$-$\omega$ (dihydroxy) polydiorganosiloxane stabilisé par un tensio-actif anionique.

2

- une dispersion dans l'alcool d'un sel d'un anhydride d'acide carboxylique et d'un aminoorganosilane, et de silice colloïdale.
- d'un catalyseur (étain).

Les intéractions entre des groupements silanols et l'acide borique ont été décrites, de même que des élastomères silicones portant des motifs B - O - Si -, dans l'ouvrage de NOLL, Chemie und Technologie der Silicone, 1968, p. 289/292.

Le brevet français publié sous le N° 2.431.992 décrit l'utilisation de granulés d'acide silicique contenant de l'acide borique comme charge dans les $\alpha$, $\omega$ (dihydroxy) diméthylpolysiloxanes durcissables en élastomères ; un mastic élastique peut être obtenu par chauffage à 110°C pendant 4 heures, dans un malaxeur, du silicone en présence de granulés d'acide silicique contenant de l'acide borique, puis après refroidissement mélange sur un cylindre de la masse silicone hautement visqueuse contenant de l'acide borique, avec de l'acide oléique et de la silice.

Dans ce qui suit, sauf mentions contraires, les pourcentages et parties sont en poids.

Un but de la présente invention est de proposer une émulsion aqueuse de silicone pouvant réticuler en un élastomère par élimination de l'eau, à température ambiante, qui ne présente pas les inconvénients des émulsions connues, ou sous une forme très atténuée.

Un autre but de la présente invention est de proposer une émulsion silicone du type ci-dessus qui soit stable au stockage, qui réticule correctement et suffisamment rapidement en un élastomère par élimination de l'eau à température ambiante, l'élastomère formé conservant ses propriétés mécaniques lors de son vieillissement.

Un autre but de la présente invention est de proposer une émulsion silicone conduisant en un élastomère présentant en outre une résistance à la flamme améliorée.

Ces buts et d'autres sont atteints par la présente invention qui concerne en effet une émulsion de silicone, réticulant en un élastomère par élimination de l'eau dans les conditions ambiantes, caractérisée en ce qu'elle est constituée de :

(A) - 100 parties en poids d'une émulsion du type huile dans eau d'un $\alpha,\omega$(dihydroxy)-polydiorganosiloxane de viscosité dynamique d'au moins 100 mPa.s à 25°C, stabilisée par au moins un agent tensio-actif choisi parmi les agents tensio-actifs anioniques et non-ioniques et leurs mélanges,

(B) - 1 à 15 parties en poids d'une charge siliceuse en poudre de renforcement, de surface spécifique BET supérieure à 50 m$^2$/g.

(C) - 0 à 250 parties en poids d'une charge minérale choisie parmi le noir de carbone, le dioxyde de titane, l'oxyde d'aluminium, l'alumine hydratée, le quartz broyé, le carbonate de calcium, l'oxyde de zinc, les terres de diatomées, le mica et le talc, de surface spécifique BET inférieure à 50 m$^2$/g,

(D) - 0,01 à 2 parties en poids d'un composé catalytique à l'étain,

(E) - 0,1 à 5 parties en poids d'un dérivé oxygéné du bore, choisi parmi l'oxyde borique, les acides boriques et les borates,

ladite émulsion ayant un pH compris entre 4 et 8 et une teneur en extrait sec d'au moins 50%.

ladite émulsion ayant un pH compris entre 4 et 8 et une teneur en extraits secs d'au moins 50 %.

Les $\alpha,\omega$-(dihydroxy)polydiorganosiloxane doivent avoir une viscosité dynamique d'au moins 100 mPa.s à 25 °C, de préférence d'au moins 50 000 mPa.s.

C'est en effet pour des viscosités supérieures à 50 000 mPa.s que l'on obtient un élastomère présentant un ensemble de propriétés mécaniques convenables, en particulier au niveau de la dureté Shore A et de l'allongement.

En outre plus la viscosité est élevée et plus les propriétés mécaniques se conservent lors du vieillissement de l'élastomère.

Les viscosités préférées pour la présente invention sont comprises entre 50 000 et 1 500 000 mPa.s à 25 °C.

Les radicaux organiques des $\alpha,\omega$-(dihydroxy)polydiorganopolysiloxanes sont des radicaux hydrocarbonés monovalents contenant jusqu'à 6 atomes de carbone, éventuellement substitué par des groupes cyano ou fluoro. Les substituants généralement utilisés du fait de leur disponibilité dans les produits industriels sont les radicaux méthyle, éthyle, propyle, phényle, vinyle et 3,3,3-trifluoropropyle. En général au moins 80 % en nombre de ces radicaux sont des radicaux méthyle.

Dans le cadre de la présente invention on préfère plus spécialement utiliser les $\alpha,\omega$-(dihydroxy)-polydiorganosiloxanes préparés par le procédé de polymérisation anionique décrit dans les brevets américains précités : US-A-2891 920 et surtout US-A-3 294 725 (cités comme référence). Le polymère obtenu est stabilisé anioniquement par un agent tensio-actif qui, conformément à l'enseignement de US-A-3 294 725 est de préférence le sel d'un métal alcalin d'un acide hydrocarboné aromatique sulfonique, l'acide libre jouant également le rôle de catalyseur de polymérisation.

Le catalyseur et l'agent tensio-actif préférés sont l'acide dodécylbenzènesulfonique et ses sels de métaux alcalins, en particulier son sel de sodium. On peut ajouter éventuellement d'autres agents tensio-actifs anioniques ou non-ioniques. Toutefois cet ajout n'est pas nécessaire car, conformément à l'enseignement de US-A-3 294 725, la quantité d'agent tensio-actif anionique résultant de la neutralisation de l'acide sulfonique est suffisante pour stabiliser l'émulsion de polymère. Cette quantité est généralement inférieure à 3 %, de préférence 1,5 % du poids de l'émulsion.

Ce procédé de polymérisation en émulsion est particulièrement intéressant car il permet d'obtenir directement l'émulsion (A). Par ailleurs ce procédé permet de pouvoir obtenir sans difficulté des émulsions (A) de $\alpha$, $\omega$-(dihydroxy)polydiorganosiloxane de très haute viscosité.

Pour préparer l'émulsion (A) on peut également partir d'$\alpha$, $\omega$-(dihydroxy)polydiorgosiloxane déjà polymérisé, puis le mettre en émulsion aqueuse en stabilisant les émulsions par un agent tensio-actif anionique et/ou non-ionique suivant un procédé bien connu de l'homme de métier et décrit en détail dans la littérature (voir par exemple les brevets FR-A-2 064 563, FR-A-2 094 322, FR-A-2 114 230 et EP-A-169 098).

Selon ce procédé, on mélange par simple agitation les polymères $\alpha$, $\omega$-(dihydroxy)polydiorganosiloxane avec l'agent tensio-actif anionique ou non-ionique, ce dernier pouvant être en solution aqueuse, à ajouter ensuite si nécessaire de l'eau et à transformer l'ensemble en une émulsion fine et homogène par passage dans un broyeur classique à colloïdes.

Par la suite la broyat obtenu est dilué par une quantité d'eau appropriée et on obtient ainsi une émulsion (A) stabilisée par un agent tensio-actif anionique ou non-ionique stable au stockage.

La quantité d'agent tensio-actif anionique et non-ionique utilisable est celle utilisée couramment pour la mise en oeuvre du procédé de mise en émulsion, en particulier ceux décrits dans les brevets précités et dans le brevet US-A-2 891 920.

Dans le cadre de la présente invention les agents tensio-actifs anioniques préférés sont le sel d'un métal alcalin d'un acide hydrocarboné aromatique sulfonique et les agents tensio-actifs non-ioniques préférés sont les alkylphénols polyoxyéthylénés. Ces agents tensio-actifs non-ioniques sont bien entendu les mêmes que ceux que l'on peut ajouter éventuellement aux émulsions (A) obtenues par polymérisation en émulsion comme indiqué plus haut.

L'émulsion (A) préparée par polymérisation en émulsion ou par mise en émulsion du polymère silicone se présente sous la forme d'une émulsion huile dans l'eau et a, de préférence, une teneur en extrait sec supérieure à 45 % en poids.

Pour 100 parties d'émulsion (A), on incorpore 1 à 15, de préférence 2 à 7 parties d'une charge siliceuse (B) en poudre de renforcement.

Ces charges siliceuses de renforcement sont choisies parmi les poudres de silice de combustion et de précipitation ou leur mélange. La silice de combustion est préférée.

Ces poudres de silice sont bien connues, elles sont utilisées en particulier comme charges dans les compositions élastomère de silicone, vulcanisables à chaud en un caoutchouc de silicone. Ces poudres présentent une taille moyenne de particule généralement inférieure à 0,1 $\mu$m et une surface spécifique BET supérieure à 50 m$^2$/g, de préférence comprise entre 150 et 350 m$^2$/g.

L'incorporation dans l'émulsion (A) de cette poudre de silice de renforcement par tout moyen convenable, en particulier par agitation, augmente considérablement la viscosité de l'émulsion (A) qui présente alors un caractère pâteux.

On a en effet trouvé, conformément à la présente invention que l'addition de 1 à 15 parties, de préférence de 2 à 7 parties d'une charge siliceuse en poudre de renforcement, est suffisante, utilisée en combinaison avec le constituant (E) pour conférer à l'émulsion un caractère "thixotrope"plus ou moins marqué. L'émulsion, extraite par exemple d'une cartouche de stockage, adhère sans s'écouler sur un substrat même vertical et durcit en élastomère par évaporation de l'eau à température ambiante. Bien entendu un léger chauffage (à 40 - 80 °C environ) de la composition pour accélérer l'évaporation de l'eau n'est pas exclu du cadre de l'invention. L'émulsion selon l'invention convient plus particulièrement dans l'industrie du bâtiment, à la réalisation de calfatage et de joint d'étanchéité.

Un autre constituant éventuel de l'émulsion selon l'invention est l'addition de 0 à 250, de préférence de 10 à 200 parties d'une charge minérale semi-renforçante ou de bourrage autre que la charge siliceuse (B).

Les charges (C) ont une granulométrie généralement comprise entre 1 et 30 $\mu$m et une surface BET inférieure à 50 m$^2$/g.

Des exemples de charges (C) utilisables seules ou en mélange sont le noir de carbone, le dioxyde de titane, l'oxyde d'aluminium, l'alumine hydratée, le quartz broyé, le carbonate de calcium, l'oxyde de zinc, les terres de diatomées, le mica et le talc.

Ces charges (C) sont introduites dans l'émulsion sous forme de poudre sèche par exemple par simple mélange.

Selon une variante de l'invention, on a découvert que si la charge (C) n'est sensiblement constituée que par de l'alumine hydratée selon une teneur de 10 à 250, de préférence de 50 à 200 parties d'alumine hydratée pour 100 parties d'émulsion (A) on obtient un élastomère ayant une résistance à la flamme particulièrement élevée qui ne peut pas être obtenue avec les autres catégories de charge (C) précitées, en particulier avec l'oxyde d'aluminium ou alumine non hydratée.

Le constituant (D) est un composé catalytique à l'étain généralement un sel d'organoétain introduit de préférence sous forme d'une émulsion aqueuse. Les sels d'organoétain utilisables sont décrits, en particulier dans l'ouvrage de NOLL, Chemistry and Technology of Silicones Academic Press (1968), page 337.

On peut également utiliser comme composé catalytique à l'étain le produit de réaction d'un sel d'étain, en particulier d'un di-carboxylate d'étain sur du polysilicate d'éthyle, comme décrit dans le brevet US-A-3 862 919.

On peut également utiliser le produit de réaction d'un silicate d'alkyle ou d'un alkyltrialcoxysilane sur le diacétate de dibutylétain comme décrit dans le brevet belge BE-A-842 305.

Les sels d'étain préférés sont les dicarboxylates de diorganoétain et en particulier les diversatates de dibutyl- ou de dioctylétain (brevet britannique GB-A-1 289 900), le diacétate de dibutyl- ou de dioctylétain, le dilaurate de dibutyl- ou de dioctylétain. On utilise de 0,01 à 2, de préférence de 0,05 à 1 partie de sel d'organoétain pour 100 parties de (A).

Le constituant (E) est un dérivé oxygéné du bore. Il est choisi parmi l'oxyde borique, les acides boriques et les borates.

L'oxyde borique est également connu sous le nom d'anhydride borique. Comme acides boriques on peut citer l'acide orthoborique, l'acide métaborique et l'acide tétraborique. Comme borates sont utilisables les triorganoborates et les borates minéraux. Sont utilisables dans le cadre de la présente invention, le borate de triéthyle, le borate de triphényle, le borate de tribenzyle, le borate de tricyclohexyle, le borate de trisméthylsilyle, le borate de tri(t-butyle), le tétraborate de diammonium, le pentaborate d'ammonium, le tétraborate de sodium décahydraté (borax), le pentaborate de potassium, le diborate de magnésium, le monoborate de calcium, le triborate de baryum et le métaborate de zinc. On peut également-utiliser les produits d'hydrolyse partielle de ces borates.

Les dérivés oxygénés du bore (E) préférés sont les acides boriques.

On utilise de 0,1 à 5, de préférence de 0,2 à 3 parties de (E) pour 100 parties de (A).

Les dérivés organiques du bore (E) peuvent être introduits dans l'émulsion de silicone par simple mélange.

Les émulsions selon l'invention peuvent être préparées de la façon suivante :

On part d'une émulsion (A) préparée soit par le procédé de polymérisation en émulsion et l'on dispose d'une émulsion stabilisée par un agent tensio-actif anionique et éventuellement non-ionique, soit par le procédé de mise en émulsion de l'$\alpha$, $\omega$-(dihydroxy)polydiorganosiloxane et l'on dispose d'une émulsion stabilisée par un agent tensio-actif anionique et/ou non-ionique.

A 100 parties de cette émulsion (A) on mélange 0,01 à 2 parties du composé catalytique à l'étain (D) et 0,1 à 5 parties d'un dérivé organique du bore (E) choisi parmi l'oxyde borique, les acides boriques et les borates.

De préférence le mélange ainsi obtenu est chauffé entre 30 et 60 °C durant quelques minutes à quelques heures et on ajoute à ce mélange la charge siliceuse en poudre de renforcement (B), puis éventuellement la charge minérale (C) autre que la charge siliceuse (B) en maintenant éventuellement le chauffage.

En général on obtient une émulsion présentant directement un pH compris entre 4 et 8. Si ce n'est pas le cas on règle le pH en ajoutant un acide ou une base minérale ou organique.

Les constituants (A), (B), (C), (D) et (E) sont mélangés en des quantités telles que l'émulsion finale présente une teneur en extrait sec supérieure à 50 %, de préférence supérieure à 60 %, mais généralement inférieure à 80 %. La zone de pH préférée est comprise entre 6 et 7.

Pour déterminer la teneur en extrait sec on place 2 g d'émulsion dans une coupelle de pesage en aluminium et on la chauffe une heure à 150 °C dans un four à circulation d'air. Après refroidissement on pèse à nouveau la coupelle et on détermine le pourcentage de matière restante sur les 2 g initiaux qui représente la teneur en extrait sec.

Selon une variante préférée, l'émulsion selon l'invention, après sa préparation, subit une étape de maturation à pH compris entre 4 et 8, par chauffage à une température de 40 °C et 80 °C pendant une durée généralement d'au moins une heure.

Plus la température de maturation est élevée et plus la durée de maturation peut être courte.

Cette étape de maturation permet d'obtenir, après élimination de l'eau, un élastomère ayant immédiatement des propriétés mécaniques appropriées.

- EXEMPLE 1 :

On prépare une émulsion (A) d'huile α, ω-(dihydroxy)polydiméthylsiloxane par polymérisation en émulsion en présence d'acide dodécylbenzènesulfonique libre et de son sel de sodium.

L'huile contenue dans l'émulsion a une viscosité de 85 000 mPa.s à 25 °C. L'émulsion (A) obtenue comporte pour 100 parties d'émulsion, 1,5 parties de sel de sodium de l'acide dodécylbenzènesulfonique, présente une viscosité à 25 °C de 20 000 mPa.s et un extrait sec de 58 %.

A 173 parties d'émulsion (A) on ajoute et on homogénéise à 40 °C, 2,6 parties d'une émulsion à base d'étain contenant 35 % en poids de dilaurate de dibutylétain (D) et une partie d'acide borique (E).

Après 10 minutes d'homogénéisation, on ajoute 7 parties de poudre de silice de pyrogénation (B) de surface spécifique BET de 300 m$^2$/g et 100 parties d'alumine hydratée (C) de granulométrie moyenne de 100 μm.

L'émulsion finale a une teneur en extrait sec de 70 % et présente directement un pH de 6,5.

Sur différents lots de cette émulsion on effectue une maturation à 50 °C suivant des durées différentes.

On prépare les films (feuils) en étendant l'émulsion, éventuellement après maturation, sur une surface plane et on laisse l'eau s'évaporer à la température ambiante.

Sur les pellicules séchées on mesure les propriétés mécaniques moyennes suivantes :
- la dureté Shore A (DSA) selon la norme ASTM-D-2240,
- la résistance à la rupture (R/R) selon la norme AFNORT-T 46 002 correspondant à la norme ASTMD 412, en mPa.s,
- l'allongement à la rupture (A/R) en % selon la norme AFNOR-T 46 002,
- le module élastique (ME) à 100 % d'allongement selon la norme AFNOR-T 46 002.

Les résultats obtenus sont rassemblés dans le tableau 1 ci-après.

- EXEMPLE COMPARATIF 1C :

On effectue exactement les mêmes opérations qu'à l'exemple 1, sauf que l'émulsion ne comporte pas le constituant (E). Les résultats obtenus sont rassemblés dans le tableau 1 ci-après.

**TABLEAU 1**

| Exemple | 1 | | | | | | 1C | | | | | |
|---|---|---|---|---|---|---|---|---|---|---|---|---|
| Maturation durée (en jours) | 0 | 3 | 6 | 7 | 9 | 10 | 0 | 3 | 6 | 7 | 9 | 10 |
| DSA | * | 9 | 19 | 20 | 22 | 22 | ** | 1,5 | 10 | 11 | 13 | 14 |
| R/R | * | 0,62 | 0,74 | 0,75 | 0,74 | 0,71 | ** | 0,24 | 0,45 | 0,47 | 0,43 | 0,40 |
| A/R | * | 1 178 | 807 | 790 | 720 | 670 | ** | 1 058 | 860 | 850 | 640 | 582 |
| ME | * | 0,21 | 0,36 | 0,37 | 0,38 | 0,38 | ** | 0,10 | 0,20 | 0,21 | 0,23 | 0,24 |

\* : caractère élastomère mais propriétés mécaniques non mesurables

\*\* : aucun caractère élastomère.

Du tableau 1, il apparaît que l'obtention rapide de propriétés mécaniques ne peut être obtenue rapidement qu'en présence d'acide borique.

Des propriétés convenables sont obtenues après 6 jours de maturation à 50 °C.

- EXEMPLES 3 ET 5 :

Ces exemples ont pour but de mettre en évidence la bonne tenue au feu (caractère autoextinguible) des élastomères contenant de l'alumine hydratée préparés à partir des émulsions selon l'invention.

Les émulsions des exemples 3 et 4 ont été préparées selon le mode opératoire et en utilisant les mêmes constituants qu'à l'exemple 1 sauf que l'on fait varier les quantités et la nature de la charge (C).

Pour apprécier la résistance à la flamme on présente en position verticale pendant 12 secondes la tranche (la section) d'une feuille d'élastomère de 2 mm d'épaisseur et de dimensions 15 cm x 15 cm en contact avec l'extrémité du cône bleu de la flamme d'un bec Bunsen.

Les résultats sont rassemblés dans le tableau 2 ci-après :

### TABLEAU 2

| Exemples | | | 3 | | 4 | | 5 |
|---|---|---|---|---|---|---|---|
| parties en poids | | Emulsion (A) | 173 | | 173 | | 173 |
| | | Silice en poudre (B) | 5 | | 5 | | 5 |
| | | Alumine hydratée (C) | 100 | | 0 | | 0 |
| | | Alumine non hydratée (C) | 0 | | 0 | | 100 |
| | | Carbonate de calcium (C) | 0 | | 150 | | 0 |
| | | Emulsion d'étain (D) | 2,6 | | 2,6 | | 2,6 |
| | | Acide borique (E) | 1 | | 1 | | 1 |
| pH en émulsion | | | 6,5 | | 7,9 | | 6,5 |
| Maturation (en jours) à 50 °C | | | 7 | 14 | 7 | 14 | 7 |
| DSA | | | 15 | 20 | 21 | 25 | 14 |
| R/R | | | 0,56 | 0,55 | 0,34 | 0,36 | 0,40 |
| A/R | | | 737 | 602 | 177 | 75 | 655 |
| ME | | | 0,29 | 0,35 | – | – | 0,30 |
| Autoextinguibilité | | | I | I | B | B | B |

I : caractère autoextinguible immédiat. Dès que la flamme est retirée, l'élastomère cesse de se consumer.

B : absence de caractère autoextinguible. Après retrait de la flamme, l'élastomère continue à brûler jusqu'à combustion complète.

Du tableau 2 il apparaît que l'alumine hydratée peut seule conférer le caractère d'autoextinguibilité (en résistance à la flamme).

## Revendications

1. Emulsion de silicone réticulant en un élastomère par élimination de l'eau dans les conditions ambiantes, caractérisée en ce qu'elle est constituée de :

(A) - 100 parties en poids d'une émulsion du type huile dans eau d'un $\alpha$-$\omega$(dihydroxy)-polydiorganosiloxane de viscosité dynamique d'au moins 100 mPa.s à 25 °C, stabilisée par au moins un agent tensio-actif choisi parmi les agents tensio-actifs anioniques et non-ioniques et leurs mélanges,

(B) - 1 à 15 parties en poids d'une silice de renforcement en poudre, de surface spécifique BET supérieure à 50 m$^2$/g,

(C) - 0 à 250 parties en poids d'une charge minérale choisie parmi le noir de carbone, le dioxyde de titane, l'oxyde d'aluminium, l'alumine hydratée, le quartz broyé, le carbonate de calcium, l'oxyde de zinc, les terres de diatomées, le mica et le talc, de surface spécifique BET inférieure à 50 m$^2$/g,

(D) - 0,01 à 2 parties en poids d'un composé catalytique à l'étain,

(E) - 0,1 à 5 parties en poids d'un dérivé oxygéné du bore, choisi parmi l'oxyde borique, les acides boriques et les borates,

    ladite émulsion ayant un pH compris entre 4 et 8 et une teneur en extrait sec d'au moins 50 %.

2. Emulsion selon la revendication 1, caractérisée en ce que le sel d'étain (D) se trouve sous forme d'une émulsion aqueuse.

3. Emulsion de silicone selon la revendication 1 ou 2, caractérisée en ce que l'émulsion (A) a une teneur en extrait sec d'au moins 45 % en poids.

4. Emulsion de silicone selon l'une quelconque des revendications précédentes, caractérisée en ce que la charge (C) est de l'alumine hydratée, selon une teneur minimum de 10, de préférence 50 parties.

5. Emulsion de silicone selon l'une quelconque des revendications précédentes, caractérisée en ce qu'elle est constituée de :

(A) : 100 parties en poids de l'émulsion du type huile dans eau d'un $\alpha,\omega$,(dihydroxy)-polydiorganosiloxane de viscosité dynamique d'au moins 100 mPa.s. à 25°C, stabilisée par un agent tensio-actif choisi parmi un sel de métal alcalin d'un acide hydrocarboné aromatique sulfonique et les alkylphénols polyoxyéthylénés,

(B) : 2 à 7 parties en poids d'une silice de combustion en poudre,

(C) : 50 à 200 parties en poids de ladite charge minérale,

(D) : 0,05 à 1 partie en poids d'un dicarboxylate de diorganoétain,

(E) : 0,2 à 3 parties en poids d'acide borique, ladite émulsion ayant un pH compris entre 6 et 7,5 et une teneur en extraits secs d'au moins 60%.

6. Procédé de préparation d'une émulsion de silicone telle que définie à l'une quelconque des revendications 1 à 5, caractérisé en ce que :

1) - on mélange l'émulsion (A), le composé catalytique (D) et le composé oxygéné (E) en chauffant éventuellement à une température de 30 à 60°C,

2) - on ajoute la silice (B) et éventuellement la charge (C) et

3) - on règle éventuellement le pH à une valeur comprise entre 4 et 8, la quantité d'eau totale utilisée étant telle que la teneur en matières solides de l'émulsion finale obtenue soit d'au moins 50 %.

7. Procédé selon la revendication 6, caractérisé en ce que l'émulsion obtenue, avant son conditionnement à l'abri de l'air, subit une étape de maturation par chauffage à une température comprise entre 40 et 80°C pendant une durée d'au moins une heure.

8. Elastomère obtenu par durcissement par évaporation de l'eau d'une composition telle que définie à l'une quelconque des revendications 1 à 5.

**Claims**

1. Silicone emulsion which crosslinks to an elastomer by elimination of water under ambient conditions, characterized in that it consists of:

(A) - 100 parts by weight of an emulsion of oil-in-water type of an $\alpha,\omega$-dihydroxypolydiorganosiloxane with a dynamic viscosity of at least 100 mPa.s at 25°C, stabilized by at least one surface-active agent chosen from anionic and non-ionic surface-active agents and their mixtures,

(B) - 1 to 15 parts by weight of a reinforcing silica powder, with a BET specific surface greater than 50 m$^2$/g,

(C) - 0 to 250 parts by weight of an inorganic filler chosen from carbon black, titanium dioxide, aluminium oxide, hydrated alumina, ground quartz, calcium carbonate, zinc oxide, diatomaceous earths, mica and talc, with a BET specific surface less than 50 m$^2$/g,

(D) - 0.01 to 2 parts by weight of a catalytic compound containing tin,

(E) - 0.1 to 5 parts by weight of an oxygen-containing boron derivative, chosen from boron oxide, boric acids and borates,

the said emulsion having a pH between 4 and 8 and a solids content of at least 50%.

2. Emulsion according to claim 1, characterized in that the tin salt (D) is in the form of an aqueous emulsion.

3. Silicone emulsion according to claim 1 or 2, characterized in that the emulsion (A) has a solids content of at least 45% by weight.

4. Silicone emulsion according to any one of the preceding claims, characterized in that the filler (C) is hydrated alumina, according to a minimum content of 10, preferably 50, parts.

5. Silicone emulsion according to any one of the preceding claims, characterized in that it consists of:

(A): 100 parts by weight of the emulsion of oil-in-water type of an $\alpha,\omega$-dihydroxypolydiorganosiloxane with a dynamic viscosity of at least 100 mPa.s at 25°C, stabilized by a surface-active agent chosen from an alkali metal salt of a hydrocarbon-substituted aromatic sulphonic acid and polyoxyethylenated alkylphenols,

(B): 2 to 7 parts by weight of a combustion silica powder,

(C): 50 to 200 parts by weight of the said inorganic filler,

(D): 0.05 to 1 part by weight of a diorganotin dicarboxylate,

(E): 0.2 to 3 parts by weight of boric acid,

the said emulsion having a pH between 6 and 7.5 and a solids content of at least 60%.

6. Process for the preparation of a silicone emulsion as defined in any one of claims 1 to 5, characterized in that:

1) - the emulsion (A), the catalytic compound (D) and the oxygen-containing compound (E) are mixed, optionally while heating at a temperature of 30 to 60°C,

2) - the silica (B) and, optionally, the filler (C) are added and

3) - the pH is optionally adjusted to a value between 4 and 8, the total amount of water used being such that the solids content of the final emulsion obtained is at least 50%.

7. Process according to claim 6, characterized in that the emulsion obtained, before being packaged with exclusion of air, is subjected to a maturing stage by heating at a temperature between 40 and 80°C for a time of at least one hour.

8. Elastomer obtained by curing by evaporation of the water from a composition as defined in any one of claims 1 to 5.

**Patentansprüche**

1. Silicon-Emulsion, die durch Entfernung von Wasser unter Umgebungsbedingungen zu einem Elastomer aushärtet, dadurch gekennzeichnet, daß sie besteht aus:

(A) - 100 Gewichtsteilen einer Emulsion vom Typ Öl-in-Wasser eines $\alpha,\omega$-(Dihydroxy)-polydiorganosiloxans mit einer dynamischen Viskosität von mindestens 100 mPa•s bei 25 °C, stabilisiert durch mindestens ein oberflächenaktives Mittel, ausgewählt unter den anionischen und nichtionischen oberflächenaktiven Mitteln und ihren Mischungen,

(B) - 1 bis 15 Gewichtsteilen eines Verstärkungs-Siliciumdioxides in Pulverform mit einer spezifischen Oberfläche BET von höher als 50 m$^2$/g,

(C) - 0 bis 250 Gewichtsteilen eines mineralischen Füllstoffes, ausgewählt unter Kohlenruß, Titandioxid, Aluminiumoxid, hydratisierter Tonerde, zerkleinertem Quarz, Calciumcarbonat, Zinkoxid, Diatomeenerde, Glimmer und Talk, mit einer spezifischen Oberfläche BET unterhalb von 50 m$^2$/g,

(D) - 0,01 bis 2 Gewichtsteilen einer katalytischen Zinn-Verbindung,

(E) - 0,1 bis 5 Gewichtsteilen eines Sauerstoff-Derivates von Bor, ausgewählt unter Boroxid, den Borsäuren und den Boraten,

wobei die genannte Emulsion einen pH-Wert zwischen 4 und 8 und einen Gehalt an Trockenextrakt von mindestens 50 % besitzt.

2. Emulsion nach Anspruch 1, dadurch gekennzeichnet, daß das Zinnsalz (D) in Form einer wäßrigen Emulsion vorliegt.

3. Silicon-Emulsion nach Anspruch 1 oder 2, dadurch gekennzeichnet, daß die Emulsion (A) einen Gehalt an Trockenextrakt von mindestens 45 Gew.-% besitzt.

4. Silicon-Emulsion nach irgendeinem der vorstehenden Ansprüche, dadurch gekennzeichnet, daß der Füllstoff (C) hydratisierte Tonerde ist, mit einem minimalen Gehalt von 10, vorzugsweise von 50 Teilen.

5. Silicon-Emulsion nach irgendeinem der vorstehenden Ansprüche, dadurch gekennzeichnet, daß sie besteht aus:

(A) - 100 Gewichtsteilen der Emulsion vom Typ Öl-in-Wasser eines $\alpha,\omega$-(Dihydroxy)-polydiorganosiloxans mit einer dynamischen Viskosität von mindestens 100 mPa•s bei 25 °C, stabilisiert durch ein oberflächenaktives Mittel, ausgewählt unter einem Alkalimetallsalz einer aromatischen Kohlenwasserstoff-Sulfonsäure und den polyoxyethylenischen Alkylphenolen,

(B) - 2 bis 7 Gewichtsteilen eines Verbrennungs-Silicium-dioxides in Pulverform,

(C) - 50 bis 250 Gewichtsteilen des genannten mineralischen Füllstoffes,

(D) - 0,05 bis 1 Gewichtsteilen eines Diorganozinn-Dicarboxylates,

(E) - 0,2 bis 3 Gewichtsteilen Borsäure, wobei die genannte Emulsion einen pH-Wert zwischen 6 und 7,5 und einen Gehalt an Trockenextrakt von mindestens 60 % besitzt.

6. Verfahren zur Herstellung einer Silicon-Emulsion wie in irgendeinem der Ansprüche 1 bis 5 definiert, dadurch gekennzeichnet, daß man:

1) - die Emulsion (A), die katalytische Verbindung (D) und die Sauerstoff-Verbindung (E) mischt, gegebenenfalls unter Erhitzen auf eine Temperatur von 30 °C bis 60 °C,

2) - das Siliciumdioxid (B) und gegebenenfalls den Füllstoff (C) hinzusetzt, und

3) - gegebenenfalls den pH auf einen Wert zwischen 4 und 8 einstellt, wobei die Gesamtmenge an verwendetem Wasser so bemessen ist, daß der Gehalt an Feststoffen in der erhaltenen Fertigemulsion mindestens 50 % beträgt.

7. Verfahren nach Anspruch 6, dadurch gekennzeichnet, daß die erhaltene Emulsion vor ihrem Verpacken unter Luftausschluß einer Stufe der Reifung durch Erhitzen auf eine Temperatur zwischen 40 °C und 80 °C während einer Dauer von mindestens einer Stunde unterzogen wird.

8. Elastomer, erhalten durch Härtung mittels Verdampfen von Wasser aus einer Zusammensetzung wie in irgendeinem der Ansprüche 1 bis 5 definiert.